# EUROPEAN PATENT SPECIFICATION

(11) **EP 3 979 017 B1**
(45) Date of publication and mention of the grant of the patent: **28.08.2024**
(21) Application number: 20199819.2
(22) Date of filing: 02.10.2020
(51) Int. Cl.: G05B 19/409, G05B 19/418

(54) **METHOD FOR CONTROLLING A VIRTUAL ASSISTANT FOR AN INDUSTRIAL PLANT**
VERFAHREN ZUR STEUERUNG EINES VIRTUELLEN ASSISTENTEN FÜR EINE INDUSTRIELLE ANLAGE
PROCÉDÉ DE COMMANDE D'UN ASSISTANT VIRTUEL POUR UNE INSTALLATION INDUSTRIELLE

(43) Date of publication of application: 06.04.2022
(73) Proprietor: ABB Schweiz AG, 5400 Baden (CH)
(72) Inventor: SCHMIDT, Benedikt, 69117 Heidelberg (DE); GAERTLER, Marco, 69221 Dossenheim (DE); MACZEY, Sylvia, 69493 Hirschberg (DE); RODRIGUEZ, Pablo, 69488 Birkenau (DE); KLOEPPER, Benjamin, 68199 Mannheim (DE); KOTRIWALA, Arzam, 68526 Ladenburg (DE); LI, Nuo, 68167 Mannheim (DE)
(74) Representative: Maiwald GmbH

(56) References cited:
- WO-A1-2019/158403
- WO-A1-2020/136597
- US-A1- 2020 026 757
- US-A1- 2020 104 723
- US-B2- 10 747 206

## Description

### FIELD OF THE INVENTION

The invention relates to a method for controlling a virtual assistant for an industrial plant and a virtual assistant.

### BACKGROUND OF THE INVENTION

Typically, plant operations are a highly automated activity today. Still, a variety of situations require human intervention, this includes maintenance/support procedures, interventions to increase efficiency/quality or interventions to address anomalies in the process.

These situations have information requirements: Operators need data and especially predictions. Which data and predictions are required is typically not foreseeable during the design and initial configuration of the system. Mechanisms to allow for automatic generation of respective data analytics and predictions is required.

Operators have information needs, which are not foreseeable during the design time of a control system.

These needs emerge during operations and may comprise estimates of time series values, anomaly detection on different data types of pattern matching of various types. This type of data analytics can be considered as advanced, as it especially tends to require analytical expertise and sometime effort to select models and generate the respective choices. In a plant setup where topology information and asset identifiers need to be set into relation to sensors and respective historic data the activity is difficult.

A result of the complexity is that the information needs typically are not matched against predictions based on matching of analytical models against the current situation, but are mainly solved by experience and gut feeling applied to the lifestream of sensor data.

Although virtual assistants for industrial applications are used to aid the operators, the above mentioned problems have not been solved.

US 2020/026757 A1 describes a method for an intelligent industrial assistant.

US 10 747 206 B2 describes intelligent data access for industrial internet of things device using latent semantic indexing.

US 2020/104723 A1 describes industrial automation compute engine syndication.

WO 2020/136597 A1 describes a method for controlling a process in a process plant.

### DESCRIPTION OF THE INVENTION

It is therefore an objective of the invention to provide an improved method for controlling a virtual assistant for an industrial plant. This objective is achieved by a method according to the claim 1 and a virtual assistant according to claim 12.

Further preferred embodiments are evident from the dependent patent claims.

According to the invention, a computer-implemented method for controlling a virtual assistant for an industrial plant comprises: Receiving, by an input interface, an information request, wherein the information request comprises at least one request for receiving information about at least part of the industrial plant. The method further comprises determining, by a control unit, a model specification using the received information request. The method further comprises determining, by a model manager, a machine learning model using the model specification and providing the determined machine learning model to the control unit. The method further comprises providing, by the control unit, a response to the information request using the determined machine learning model.

The method comprises the steps of determining, by a session manger, user action information relating to tracked actions and context information of an individual user, determining, by the session manager, individual user information using the received user action information, requesting, by a state manager, service landscape information based on the individual user information wherein the service landscape relates to a structure of the industrial plant in a section relevant to the user, determining, by the state manager, global information using the received service landscape information, wherein the global information comprises information about ongoing processes, workflows, tasks and actions of the industrial plant, and determining, by the session manager, a response for the user using the global information.

Determining individual user information comprises tracking actions and context information of an individual user.

The method comprises collecting user actions over a period of time, analyzing the user actions, thereby recognizing patters of user actions, determining a predicted information intent using the recognized patterns, determining a predicted machine learning model using the predicted information intent and determining a predicted response using the predicted information intent.Preferably, the input interface comprises a natural language interface and/or a dynamical user interface. In other words, the virtual assistant receives an information request from a user in a natural language of the user or entered via a graphic user interface, GUI.

The response to the information request of the user preferably comprises process variable values of at least part of the industrial plant, events and/or alarms.

Preferably, the determined individual user information is provided to the state manager.

Preferably, the determined global information is provided to the session manager.

Preferably, the session manager tracks the user actions and context information of the individual user to determine the user action information.

Preferably, the user action information comprises an information request of the user. The user action information is preferably received via the input interface.

The term "global information", as used herein, comprises information about ongoing processes, workflows, tasks and actions of the industrial plant. This for example includes a location, associates roles of users, active users, an underlying goal of a process, progress requirements, regulations, operational procedures, safety regulations, dependencies to other systems, impact and risk analyses. The global information is globally shared and is not directly associated with a single user. Preferably, the global information is managed by a state manager.

The term "individual user information", as used herein, comprises actions and/or context information of an individual user. The individual user information is personalized and always belongs to exactly one user. Preferably, the individual user information is tracked by a session manager. The context information preferably comprises information relating to the general context of the user, for example, an operational role of user.

Preferably, the session manager and the state manager are linked due to an association of the individual user to his operational roles and involvement in activities.

Preferably, actions and requests triggered by a user will update the individual user information, or in other words a state of the session manager.

Preferably, the virtual assistant processes the steps of translating the information request into machine understandable format, preparing and executing relating required technical queries, processing and aggregation of incoming results and translation of the machine generated response into a response representable for the user.

The individual user information, in particular changes in the individual user information, is provided to the state manager. This propagation of the individual user information influences the session manger. In other words, the individual user information is used to determine the global information. For example, when a user executes a safety relevant task, which in general is indicated by individual user information, this individual user information is relevant to the session manager for adjusting the global information, in this case, warning other users in the area of the safety relevant task of another user. In other words, updates of the individual user information and statuses of the session manager preferably trigger an update in the state manager and thus the global information. Further preferably, an update in the state manager preferably triggers an update of the session manager and thus the individual user information for all associated users.

Existing assistant system can be operated by multiple users, yet during a single interaction the focus is on a single individual. The context of the individual is sparsely used. Most frequently used information are personal preferences and settings, locations and identifications for associated technical systems. Rarely, environmental information such as weather or holiday seasons are considered. As such assistants are usually unaware of larger (social) constructs and the involvement of other individuals and systems. Furthermore, as assistant systems usually focus on delivering information from predefined databases and delegation to selected predefined services, the underlying motivation of the requester, degree of completeness and satisfaction and the impact on other users is never assessed and incorporated in future actions.

Taking into account global information and individual user information allows for an improved collaboration between different users and/or systems, while ensuring transparency, traceability, safety and conformity.

Furthermore, the virtual assistant provides the usability and comfort of a personal assistant to the workplace.

Thus, an improved method for controlling a virtual assistant is provided.

In a preferred embodiment, the method comprises: Identifying, by the control unit, an information intent using the received information request, and determining the model specification using the information intent.

Consequently, the machine learning model is determined based on the information intent.

The term "information intent", as used herein, relates to an intent, with which a user formulates a request to the virtual assistant. The information intent preferably comprises a request option. The request option preferably is a predetermined request option. Furthermore, the information intent preferably comprises a formalized declaration of intent. In addition, the information intent preferably comprises a specified response expectation.

Preferably, the information intent indicates a plant component of the industrial plant to be addressed and an information need related to the plant component. For example, the information intent covers information of an upcoming behaviour of a specific plant component, for example a tank, at a specific location, for example in a specific sector. For example, the user enters the information intent into the virtual assistant by saying, "Tell me about the upcoming behavior of the tank in sector AB123". Other examples comprise: "Estimate, when the tank in sector ABC123 reaches a fill level of 20%"; "Predict the time until a temperature in plant segment B reaches 50°C."

In addition, the information intent preferably comprises a list of tasks that have to be worked off. In particular, such a list of tasks may include complex preconditions that have to be checked.

Preferably, determining the model specification using the information intent, comprises decomposing the information intent to the model specification.

Preferably, determining the model input comprises mapping plant components of the industrial plant to respective sensors of the industrial plant using topology information of the industrial plant and the information intent. In other words, topology information is used to find the sensors that need to be read out in order to determine a response.

The term "model specification", as used herein, relates to the function of the machine learning model. In other words, the model specification indicates technical requirements of the machine learning model that are needed to be able to determine a response to the information intent.

Considering the intent of the requesting user allows for better operation by the user by increasing situational awareness provided by the virtual assistant.

Preferably, the user is provided with data analytics and/or predictions relating to the information request using the information intent.

Thus, an improved method for controlling a virtual assistant is provided.

In a preferred embodiment, determining a machine learning model comprises: checking, using the model specification, whether a suitable machine learning model is stored in a model database.

In other words, based on the model specification, a request is generated, requesting machine learning model from the model manager that fulfills the model specification and thus can be used to determine a response to the information request, in particular in view of the information intent.

The term "suitable machine learning model", as used herein, relates to a machine learning model that can be used to determine a response to the information request, in particular in view of the information intent.

Thus, an improved method for controlling a virtual assistant is provided.

In a preferred embodiment, if it is determined that a suitable machine learning model is stored in the model database the method comprises the step determining the response to the information request by using the stored machine learning model.

Consequently, the information request of the user can be responded to in real-time.

Thus, an improved method for controlling a virtual assistant is provided.

In a preferred embodiment, determining the response to the information request comprises providing model input by the control unit, wherein the model input is determined by using the information intent, and determining the response by inputting the model input into the machine learning model.

In a preferred embodiment, if it is determined that no suitable machine learning model is stored in the model database, the method comprises the step of providing a delay response to the user.

Preferably, the delay response comprises an estimated delay time. In this way, the user can be informed in real-time, how long he has to wait for a response to his information request.

Thus, an improved method for controlling a virtual assistant is provided.

In a preferred embodiment, if it is determined that no suitable machine learning model is stored in the model database, the method comprises the step of determining, by an autoML pipeline, a machine learning model candidate using the information intent, testing a model quality of the machine learning model candidate, determining the machine learning model using the machine learning model candidate, if the model quality is acceptable and informing the user of unsuccessful model generation, if the model quality is not acceptable.

In other words, the autoML pipeline, a parametrization for the machine learning model candidate is determined using the information intent.

Preferably, the machine learning models in the model database are tagged, in particular relating to their function. In other words, the model specification is compared to the tags of the machine learning models in the model database.

In other words, the usage of the autoML pipeline is directly dependent on the provided information intent. For example, the information intent comprises information how frequent a specific machine learning model is used, and/or time dependencies, in other words, how frequent a specific machine learning model is used at a specific time frame.

Automatic generation of machine learning models based on information intent allows for enabling automation of interactions which else require time consuming manual interaction.

Thus, an improved method for controlling a virtual assistant is provided.

In a preferred embodiment, identifying an information intent comprises translating the information request into a machine understandable format.

In other words, decomposing the information intent comprises translating the information request into a machine understandable format. For example, if the information request is in a form of natural language of the user, the natural language of the user is translated into a machine understandable format that the control unit is able to process.

Thus, an improved method for controlling a virtual assistant is provided.

In a preferred embodiment, providing a response comprises translating the determined response into a user understandable format.

Thus, an improved method for controlling a virtual assistant is provided.

In a preferred embodiment, the step of analyzing the user actions is repeated in a predetermined frequency.

Thus, an improved method for controlling a virtual assistant is provided.

In a preferred embodiment, the method comprises the steps of receiving semantic information for a desired information intent and determining the information intent using the received semantic information.

Preferably, determining the information intent by using the received semantic information comprises teaching the information intent to the virtual assistant by the user.

Since the virtual assistant can be addressed through a natural language interface it sometimes happens that the virtual assistant is not able to derive an information intent from the user interaction. The user is then forced to rephrase his question or to use a different input interface to get the desired information or submit a command. In other cases the virtual assistant might be able to derive the user's information intent, but the response might be insufficient or even incorrect. A typical user of such a virtual assistant does not know how to formulate and enter a new information intent in an information intent database used by the virtual assistant.

Consequently, the virtual assistant is aware of an information intent relating to creating a new information intent. When the information intent of creating a new information intent is triggered by the user, the virtual assistant guides the user through a specific workflow and collects necessary information for the information intent, like a name of the intent, keywords, desired actions, conditions and necessary contexts.

In addition, the virtual assistant is aware of an information intent relating to a feedback information intent. This feedback information intent is preferably triggered by the user with the line "that's wrong". The feedback information intent triggers a workflow in the virtual assistant asking the user where exactly the error occurred and depending on the additional input of the user stats retraining the machine learning model responsible for the provided response. Alternatively, the feedback of the user is forwarded to corresponding services.

When evaluating the model quality of the machine learning model, if the model quality had a relatively low score, the virtual assistant is configured to proactively ask the user for feedback information intent. For example, the virtual assistant asks the user "Did you want to check valve 123?".

Preferably, the necessary information for the information intent comprise a name of the information intent, typical phrases, the user uses to utter the event, important keywords, the action to be performed, for example performing a new analytics service or following a workflow to be defined, combinations of already known information intents, valid contexts for the information intent and/or a response text to be given by the virtual assistant.

Preferably, the feedback information intent comprises an acoustic misunderstanding, a wrong phrase intent matching and/or an error in the result of an information retrieval service.

Preferably, the virtual assistant provides an intent editor for the user, wherein the user can insert the desired information intent.

Thus, the virtual assistant is enhanced with the capability to be thought new information intents of different behavior by the user. Furthermore, the user is be able to give feedback in case of an inadequate answer.

According to an aspect, a virtual assistant is configured for executing the method, as described herein.

Preferably, the virtual assistant comprises a model scorer, which is configured for determining if the model quality of the machine learning model candidate is acceptable.

Preferably, a computer program is provided, comprising instructions which, when the program is executed by a computer, cause the computer to carry out the method, as described herein.

Preferably, a computer-readable data carrier is provided, having stored there on the computer program, as described herein.

### BRIEF DESCRIPTION OF THE DRAWINGS

The subject matter of the invention will be explained in more detail in the following text with reference to preferred exemplary embodiments, which are illustrated in the attached drawings, in which:
Fig.1 shows a schematic view of a virtual assistant;
Fig. 2 shows a schematic view of a method for controlling a virtual assistant;
Fig. 3 shows another schematic view of a method for controlling a virtual assistant;
Fig. 4 shows another schematic view of a virtual assistant;
Fig. 5 shows another schematic view of a virtual assistant;
Fig. 6 shows another schematic view of a method for controlling a virtual assistant.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

Preferably, the functional modules and/or the configuration mechanisms are implemented as programmed software modules or procedures, respectively; however, one skilled in the art will understand that the functional modules and/or the configuration mechanisms can be implemented fully or partially in hardware.

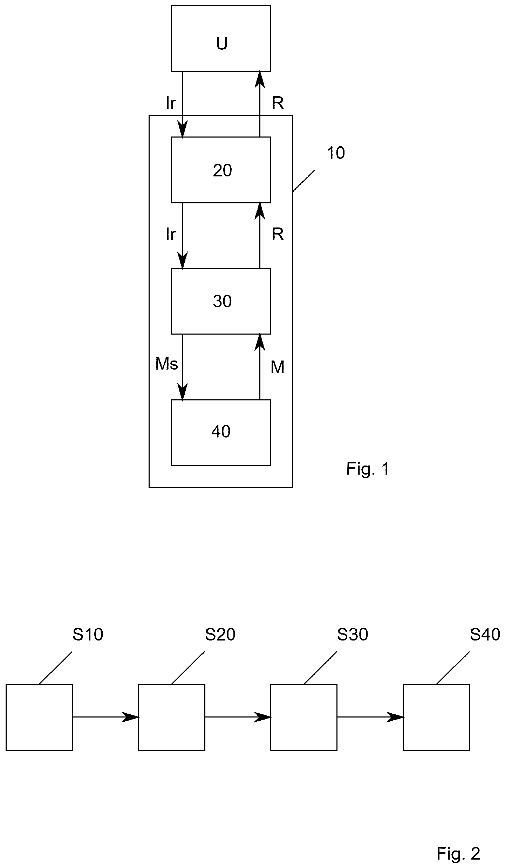

Fig. 1 shows a virtual assistant 10 that is in particular used in an industrial plant. In other words, a user U, being an operator of the industrial plant, uses the virtual assistant 10 as support in his work in the industrial plant. For example, the user U requests a certain process variable value, like a pressure of a certain valve, from the virtual assistant 10. The virtual assistant 10 comprises an input interface 20, a control unit 30 and a model manager 40. The user U enters an information request Ir into the virtual assistant 10, in particular into the input interface 20. The input interface 20 can comprise a graphic user interface, GUI. In this case, the user U enters his information request into the virtual assistant 10 by selecting at least one of a plurality of choices offered by the GUI. Alternatively, the input interface 20 comprises a language interface. In this case, the user U just formulates his information request Ir in a natural language. For example, the user U asks the virtual assistant 10 "How high is the pressure in valve 123?". The input interface 20, in any case, translates the input of the user U into a machine understandable format that the control unit can process.

The information request Ir of the user is consequently propagated through the input interface 20 to the control unit 30. The control unit 30 processes the information request Ir, thereby determining a model specification Ms using the received information request Ir. In other words, the control unit 30 determines, what specification a machine learning model M should have in order to be able to determine a response R to the information request Ir.

The model specification Ms is provided to the model manager 40. The model manager 40 determines a suitable machine learning model M using the provided model specification Ms. In other words, the model manager 40 determines a suitable parametrization for the machine learning model M. In the provided exemplary case, the model manager 40 provides a machine learning model M that is able to provide a response R to the information request Ir concerning the pressure of the specific valve.

Consequently, the determined machine learning model M is provided to the control unit 30. The control unit 30 uses the machine learning model M to determine the response R to the information request Ir. The control unit 30 therefore determines necessary inputs to the machine learning model M, in particular mapping equipment of the industrial plant to respective sensors using topology information of the industrial plant. In other words, the control unit 30 maps the sensor outputs of the relevant real-life sensors to the respective inputs of the machine learning model M.

The response R is then provided to the input interface 20, which is also configured to translate the response R into a natural language format. For example, the virtual assistant 10 is configured for using the input interface 20 to provide a direct response R to the user U in the same language, the user U has used to input the information request Ir.

Fig. 2 shows a schematic view of a method for controlling the virtual assistant 10.

In a first step S10, an input interface receives an information request Ir, wherein the information request Ir comprises at least one request for receiving information about at least part of the industrial plant. In a second step S20, a control unit 30 receives a model specification Ms using the received information request Ir. In a third step S30, a model manager 40 determines a machine learning model M using the model specification Ms. In a fourth step S40, the control unit 30 provides a response R to the information request Ir using the determined machine learning model M.

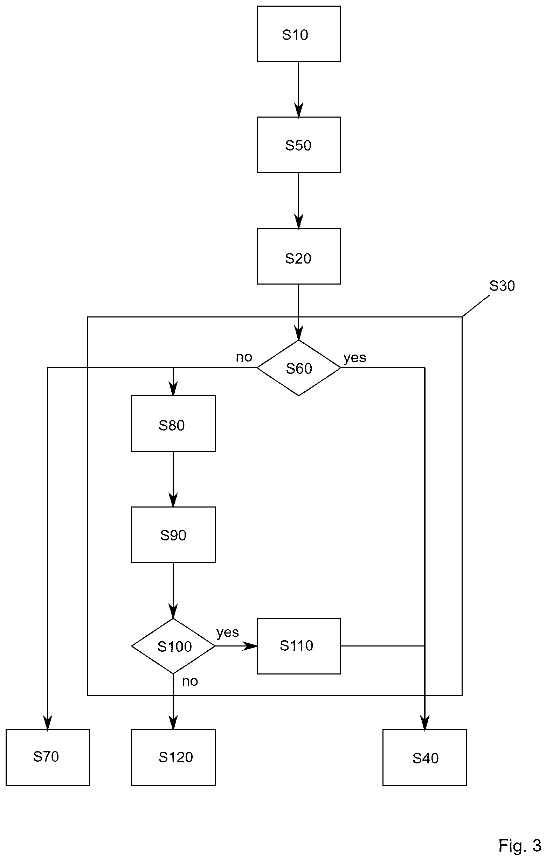

Fig. 3 shows another schematic view of a control method of a virtual assistant 10.

In contrast to the method of fig. 2, in a further step S50, the control unit 30 identifies an information intent I using the received information request Ir. Based on the information intent I, the model specification Ms is determined. The information intent I offers an additional layer of depth to the determination of the model specification Ms.

In addition, the step S30 of determining the machine learning model M is further specified. In a further step S60, a model database is checked for a suitable machine learning model M that is able to be used to determine a response R to the information request Ir. If it is determined, that a suitable machine learning model M in accordance with the model specification Ms is present in the model database, the machine learning model M is provided to the control unit 30. As described, in a step S40, the control unit 30 provides a response R to the information request Ir using the determined machine learning model M.

If it is determined, that no suitable machine learning model M in accordance with the model specification Ms is present in the model database, in a further step S70, the user U is informed about a delay. At the same time, in a further step S80, an auto machine learning, autoML, process is started to generate a suitable machine learning model M in accordance with the model specification Ms. This potential machine learning model is referred to as machine learning model candidate Mc.

In a further step S90, a model quality of the machine learning model candidate Mc is tested. If the model quality of the machine learning model candidate Mc is suitable. If it is determined in a further step S100 that the machine learning model candidate Mc has an acceptable model quality, the method jumps to a further step S110, wherein the machine learning model candidate Mc is stored into the model database as a further machine learning model M. The method then jumps to step S40, wherein the the control unit 30 provides a response R to the information request Ir using the determined machine learning model M.

If it is determined in the further step S100 that the machine learning model candidate Mc has not an acceptable model quality, the method jumps to a further step S120, wherein the user U is informed about an unsuccessful generation of a machine learning model and thus a failure of the method. Thus, the user U is informed that he cannot expect a response R to his information request Ir. The user U thus either has to accept that no response R can be given by the virtual assistant 10 or has to retry another information request Ir. Another information request Ir might be possible by rephrasing the initial information request Ir.

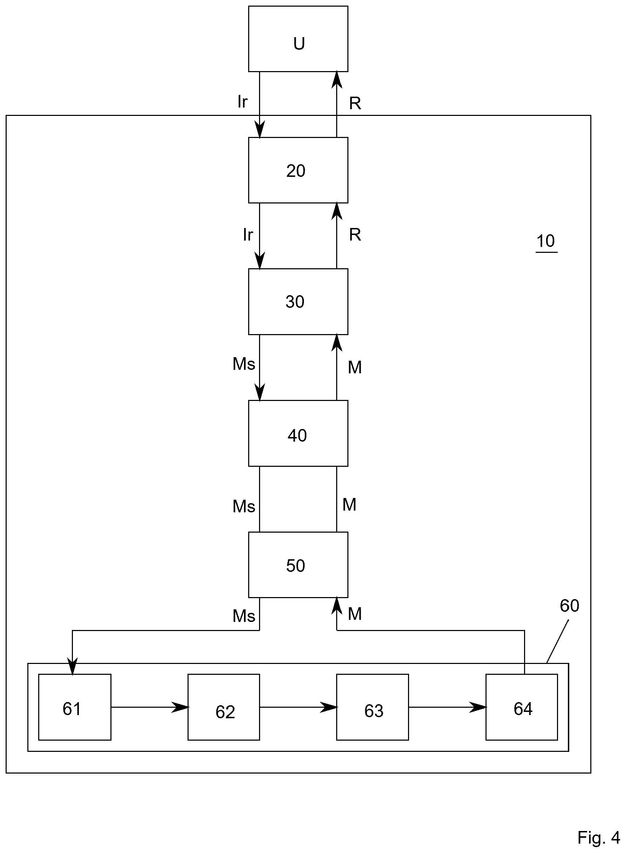

Fig. 4 shows another schematic view of a virtual assistant 10. Compared to the virtual assistant 10 in fig. 1, the model manager 40 is extended by an ad-hoc model generator 50 and an auto machine learning, autoML, pipeline 60. The autoML pipeline 60 comprises a data selector 61, a model selector 62, a model generator 63 and a model evaluator 64.

If no suitable machine learning model M is available in the model database, the ad-hoc model generator 50 determines a new machine learning model M. The ad-hoc model generator 50 determines the new machine learning model M in real-time.

The generation of the machine learning model M is supported by the autoML pipeline. Based on the model specification Ms, the data selector 61, the model selector 62 and the model generator 63 determine the machine learning model M. The machine learning model M is then evaluated by the model evaluator 64, in order to make sure that the machine learning model M is suitable for determining a response R to the information request Ir. The determined machine learning model M is the propagated from the autoML pipeline through the model generator 50 and the model manager 40 to the control unit 30.

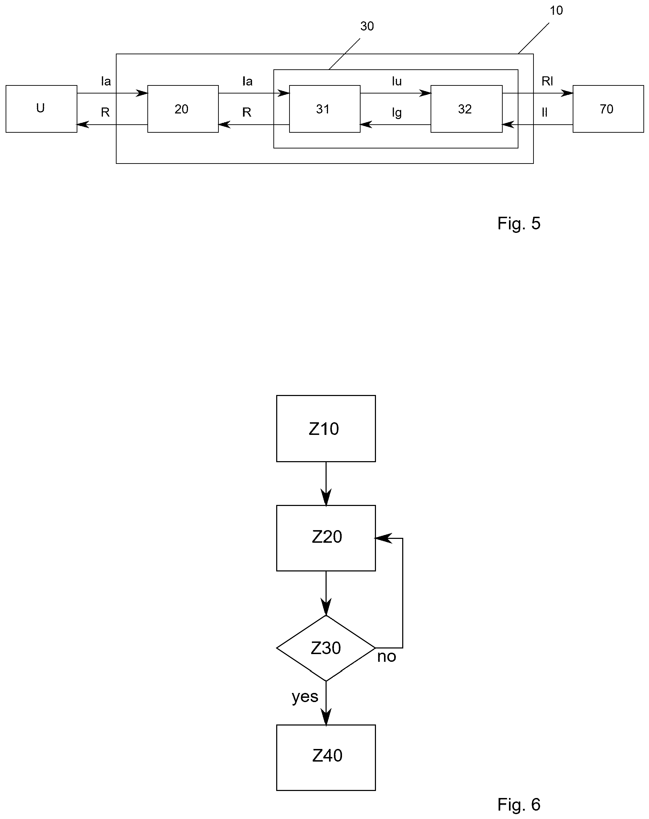

Fig. 5 shows another schematic view of a virtual assistant 10. Compared to the already described virtual assistant 10, the control unit 30 is extended by a session manager 31 and a state manager 32. The session manager 31 tracks actions and context information of an individual user U. The information associated with the user U by the session manager 31 are personalized and always belong to exactly one user U. This information is referred to an individual user information Il. The state manager 32 manages ongoing processes, workflows, tasks and actions of the user, called global information Ig. This for example comprises a location of the user, a role associated to the user, active users, an underlying goal, a progress, requirements regulations, operational procedures, safety regulations, dependencies on other systems, impact and risk analysis. This information is globally shared and is not associated with a single user U.

The session manager 31 receives user action information Ia. The user action information Ia for example is received over the input interface 20. However, the user action information Ia may be received over another channel too. The session manager 31 determines individual user information Iu using the received user action information Ia. In other words, the session manager 31 associates specific user action information Iu to a specific user U. The individual user information Iu is provided to the state manager 32. The state manager 32 uses the individual user information Iu to execute a landscape request, requesting service landscape information Il from the service landscape 70. The service landscape 70 relates to the structure of the industrial plant in the section relevant to the user U. In other words, the service landscape 70 is an indication of all entities of the industrial plant relevant for the user U and their interconnection as well as their condition. The state manager 32 uses the received service landscape information Il to determine the global information Ig. Consequently, the session manager 31 uses the global information Ig to determine a response R for the user.

In an example of a hazardous operation, a user U starts a task at a specific location and reports the location via the virtual assistant 10. The session manager 31 updates a state of the user U and propagates the respective individual user information Iu to the state manager 32. The state manager 32 receives the individual user information Iu, comprising the location of the user U and a start of the activity of the user. The state manager 32 checks potential hazardous situations that can arise at the location and activates a monitor to continue updates of the status of the location. Furthermore, the state manager 32 requests reports of global monitors in the service landscape 70. In this case, the service landscape information Il of the service landscape 70 reports an abnormality that conflicts with safety regulations for humans, thus the user U. The monitoring task in the state manager 32 reacts on the incoming service landscape information Il and identifies all associated users within the given location. Also, the state manager 32 collects guidelines to react if available and issues an alarm to the session manager 31. This alarm is part of the global information Ig provided from the state manager 32 to the session manager 31. The session manger 31 receives the alarm and actively informs the user U about the situation of his current location. For example, if the task ends or the user U moves to a different location, this will implicitly terminate the monitor for the starting location and thus avoid unnecessary notification. For example, if the user U already informs the virtual assistant 10 of the intent to start some task ahead of time, the virtual assistant can check that location before the start of the action actually has been started.

In another example of a hazardous operation, the user U intents to start a task at a specific location. On the way to the location, an abnormality is observed. An information request Ir of the user U to the virtual assistant 10 is issued about the status of the current location of the user U. The session manager 31 updates the state of the user and propagates the individual user information to the state manager 32. The state manager 32 requests a lookup in the global monitors requesting service landscape information Il of the location. The request does not return an unusual state. The user requests a validation by another human in the control room. Visual and audio information of the current situation together with his description of the situation is bundled and forwarded as individual user information Iu. The state manager 32 provides the information request Ir to an operator in the control room with the individual user information Iu. The situation is evaluated manually and global information Ig are determined for the state manager 32 based on the manual evaluation. In a further example, if multiple operators can proves this request, they will all be notified. Once an operator actively works on the task, the notification for the other operator is remove or marked as work in progress. In case of a safety risk, the virtual assistant 10 also informs the users in the associated area. The original requester will get only one notification, as the virtual assistant 10 with the help of the session manager 32 validates that the response and the alarm belong to the same event.

Fig. 6 shows another schematic view of a method for controlling a virtual assistant. In a step Z10, user actions of a user U are collected over a predetermined period of time. In a further step Z20, the user actions are analysed in order to recognize patterns of the user actions. In a further step Z30, it is determined, if patterns of the user actions have been identified. If no pattern has been identified, the method goes back to step Z20. If a pattern has been identified, relevant information intent I is associated with the recognized pattern. In other words, it is determined, which information intent I relates to the determined recognized pattern. In a further step Z40, the information intent I and the associated recognized pattern are stored in an intent database. By this, if in the future, a stored pattern is recognized in an information request, the associated information intent I can be predicted. Doing this, shortcuts can be learned for the information intent I or next actions for the user can be suggested based on the recognized pattern.

### LIST OF REFERENCE SYMBOLS

- 10: virtual assistant
- 20: input interface
- 30: control unit
- 31: session manger
- 32: state manager
- 40: model manager
- 50: ad-hoc model generator
- 60: autoML pipeline
- 61: data selector
- 62: model selector
- 63: model generator
- 64: model evaluator
- 70: service landscape
- Ir: information request
- Ms: model specification
- M: machine learning model
- R: response
- Mr: model request
- U: user
- Iu: individual user information
- Ig: global information
- Ia: user action information
- Rl: landscape request
- Il: service landscape information
- I: information intent
- Mc: machine learning model candidate
- S10: receiving an information request
- S20: determining a model specification
- S30: determining a machine learning model
- S40: providing a response to the information request
- S50: identifying information intent
- S60: checking a model database for a suitable machine learning model
- S70: informing user about delay
- S80: generate machine learning model candidate
- S90: testing machine learning model candidate
- S 100: model quality acceptable
- S 110: storing the machine learning model candidate
- S 120: informing the user about failure
- Z10: collect user actions
- Z20: analyse user actions
- Z30: determine if patters are identified
- Z40: store pattern and information intent

## Claims

1. Computer-implemented method for controlling a virtual assistant (10) for an industrial plant, comprising:
receiving (S10), by an input interface (20), an information request (Ir), wherein the information request (Ir) comprises at least one request for receiving information about at least part of the industrial plant;
determining (S20), by a control unit (30), a model specification (Ms) using the received information request (Ir);
determining (S30), by a model manager (40), a machine learning model (M) using the model specification (Ms), and providing the determined machine learning model (M) to the control unit (30); and
providing (S40), by the control unit (30), a response (R) to the information request (Ir) using the determined machine learning model (M);
determining, by a session manger (31), user action information (Ia) relating to tracked actions and context information of an individual user (U);
determining, by the session manager (31), individual user information (Iu) using the received user action information (Ia), wherein determining individual user information (Iu) comprises tracking actions and context information of the user (U);
requesting, by a state manager (32), service landscape information (Il) from a service landscape (70) based on the individual user information (Iu), wherein the service landscape (70) relates to a structure of the industrial plant in a section relevant to the user (U);
determining, by the state manager (32), global information (Ig) using the received service landscape information (II), wherein the global information (Ig) comprises information about ongoing processes, workflows, tasks and actions of the industrial plant;
determining, by the session manager (31), the response (R) for the user (U) using the global information (Ig);
collecting user actions over a period of time;
analyzing the user actions, thereby recognizing patterns of user actions;
associating information intent (I) with the recognized patterns; and
predicting the information intent (I) of an information request using the recognized patterns.

2. Method of claim 1, comprising:
identifying (S50), by the control unit (30), an information intent (I) using the received information request (Ir); and
determining the model specification (Ms) using the information intent (I).

3. Method of any of the preceding claims,
wherein determining a machine learning model (M) comprises:
checking, using the model specification (Ms), whether a suitable machine learning model is stored in a model database.

4. Method of any of the preceding claims,
wherein, if it is determined that a suitable machine learning model is stored in the model database, the method comprises the step:
determining the response (R) to the information request (Ir) by using the stored machine learning model.

5. Method of any of the preceding claims,
wherein determining the response to the information request (Ir) comprises:
providing model input by the control unit (40), wherein the model input is determined by using the information intent (I);
determining the response (R) by inputting the model input into the machine learning model (M).

6. Method of any of the preceding claims,
wherein, if it is determined that no suitable machine learning model is stored in the model database, the method comprises the step:
providing a delay response to a user (U).

7. Method of claim 6, comprising:
determining, by an autoMI, pipeline (60), a machine learning model candidate using the information intent (I);
testing a model quality of the machine learning model candidate;
determining the machine learning model (M) using the machine learning model candidate, if the model quality is acceptable; and
informing the user (U) of unsuccessful model generation, if the model quality is not acceptable.

8. Method of any of the preceding claims,
wherein identifying an information intent comprises:
translating the information request into a machine understandable format.

9. Method of any of the preceding claims,
wherein providing a response (R) comprises:
translating the determined response into a user understandable format.

10. Method of claim 1,
wherein the step of analyzing the user actions is repeated in a predetermined frequency.

11. Method of any of the preceding claims, comprising:
receiving semantic information for a desired information intent;
determining the information intent using the received semantic information.

12. Virtual assistant, configured for executing the method of any of the claims 1- 11.

## Patentansprüche

1. Computer-implementiertes Verfahren zur Steuerung eines virtuellen Assistenten (10) für eine Industrieanlage, umfassend:
• Empfangen (S10) einer Informationsanfrage (Ir) durch eine Eingabeschnittstelle (20), wobei die Informationsanfrage (Ir) mindestens eine Anfrage zum Empfangen von Informationen über mindestens einen Teil der Industrieanlage umfasst;
• Bestimmen (S20) einer Modellspezifikation (Ms) durch eine Steuereinheit (30) unter Verwendung der empfangenen Informationsanfrage (Ir);
• Bestimmen (S30) eines maschinellen Lernmodells (M) durch einen Modellmanager (40) unter Verwendung der Modellspezifikation (Ms) und Bereitstellen des bestimmten maschinellen Lernmodells (M) an die Steuereinheit (30); und
• Bereitstellen (S40) einer Antwort (R) auf die Informationsanfrage (Ir) durch die Steuereinheit (30) unter Verwendung des bestimmten maschinellen Lernmodells (M); **gekennzeichnet durch**:
• Bestimmen von Benutzeraktionsinformationen (Ia) durch einen Sitzungsmanager (31) in Bezug auf verfolgte Aktionen und Kontextinformationen eines einzelnen Benutzers;
• Bestimmen von individuellen Benutzerinformationen (Iu) durch den Sitzungsmanager (31) unter Verwendung der empfangenen Benutzeraktionsinformationen (Ia), wobei das Bestimmen von individuellen Benutzerinformationen (Iu) das Verfolgen von Aktionen und Kontextinformationen eines einzelnen Benutzers umfasst;
• Anfordern von Servicelandschaftsinformationen (Il) durch einen Zustandsmanager (32) aus einer Servicelandschaft (70) basierend auf den individuellen Benutzerinformationen (Iu), wobei sich die Servicelandschaft (70) auf die Struktur der Industrieanlage in einem für den Benutzer (U) relevanten Abschnitt bezieht;
• Bestimmen von globalen Informationen (Ig) durch den Zustandsmanager (32) unter Verwendung der empfangenen Servicelandschaftsinformationen (Il), wobei die globalen Informationen (Ig) Informationen über laufende Prozesse, Arbeitsabläufe, Aufgaben und Aktionen der Industrieanlage umfassen; und
• Bestimmen einer Antwort (R) für den Benutzer (U) durch den Sitzungsmanager (31) unter Verwendung der globalen Informationen (Ig);
• Sammeln von Benutzeraktionen über einen Zeitraum;
• Analysieren der Benutzeraktionen, wobei Muster der Benutzeraktionen erkannt werden;
• Zuordnen einer Informationsabsicht (I) zu den erkannten Mustern; und
• Vorhersagen der Informationsabsicht (I) einer Informationsanfrage unter Verwendung der erkannten Muster.

2. Verfahren nach Anspruch 1, umfassend:
• Identifizieren (S50) einer Informationsabsicht (I) durch die Steuereinheit (30) unter Verwendung der empfangenen Informationsanfrage (Ir); und
• Bestimmen der Modellspezifikation (Ms) unter Verwendung der Informationsabsicht (I).

3. Verfahren nach einem der vorhergehenden Ansprüche, wobei das Bestimmen eines maschinellen Lernmodells (M) umfasst:
• Überprüfen, ob ein geeignetes maschinelles Lernmodell in einer Modelldatenbank gespeichert ist, unter Verwendung der Modellspezifikation (Ms).

4. Verfahren nach einem der vorhergehenden Ansprüche, wobei, falls bestimmt wird, dass ein geeignetes maschinelles Lernmodell in der Modelldatenbank gespeichert ist, das Verfahren den Schritt umfasst:
• Bestimmen der Antwort (R) auf die Informationsanfrage (Ir) unter Verwendung des gespeicherten maschinellen Lernmodells.

5. Verfahren nach einem der vorhergehenden Ansprüche, wobei das Bestimmen der Antwort auf die Informationsanfrage (Ir) umfasst:
• Bereitstellen von Modelleingaben durch die Steuereinheit (40), wobei die Modelleingaben unter Verwendung der Informationsabsicht (I) bestimmt werden;
• Bestimmen der Antwort (R) durch Eingabe der Modelleingaben in das maschinelle Lernmodell (M).

6. Verfahren nach einem der vorhergehenden Ansprüche, wobei, falls bestimmt wird, dass kein geeignetes maschinelles Lernmodell in der Modelldatenbank gespeichert ist, das Verfahren den Schritt umfasst:
• Bereitstellen einer verzögerten Antwort an einen Benutzer (U).

7. Verfahren nach Anspruch 6, umfassend:
• Bestimmen eines maschinellen Lernmodellkandidaten durch eine AutoML-Pipeline (60) unter Verwendung der Informationsabsicht (I);
• Testen der Modellqualität des maschinellen Lernmodellkandidaten;
• Bestimmen des maschinellen Lernmodells (M) unter Verwendung des maschinellen Lernmodellkandidaten, wenn die Modellqualität akzeptabel ist; und
• Informieren des Benutzers (U) über die erfolglose Modellerstellung, wenn die Modellqualität nicht akzeptabel ist.

8. Verfahren nach einem der vorhergehenden Ansprüche, wobei das Identifizieren einer Informationsabsicht umfasst:
• Übersetzen der Informationsanfrage in ein maschinenverständliches Format.

9. Verfahren nach einem der vorhergehenden Ansprüche, wobei das Bereitstellen einer Antwort (R) umfasst:
• Übersetzen der bestimmten Antwort in ein benutzerverständliches Format.

10. Verfahren nach Anspruch 1, wobei der Schritt des Analysierens der Benutzeraktionen in einer vorbestimmten Frequenz wiederholt wird.

11. Verfahren nach einem der vorhergehenden Ansprüche, umfassend:
• Empfangen semantischer Informationen für eine gewünschte Informationsabsicht;
• Bestimmen der Informationsabsicht unter Verwendung der empfangenen semantischen Informationen.

12. Virtueller Assistent, eingerichtet zur Ausführung des Verfahrens nach einem der Ansprüche 1 bis 11.

## Revendications

1. Procédé mis en œuvre par ordinateur pour commander un assistant virtuel (10) pour une installation industrielle, le procédé comprenant les étapes suivantes :
recevoir (S10), par une interface d'entrée (20), une demande d'informations (Ir), où la demande d'informations (Ir) comprend au moins une demande de réception d'informations sur au moins une partie de l'installation industrielle ;
déterminer (S20), par une unité de commande (30), une spécification de modèle (Ms) en utilisant la demande d'informations reçue (Ir) ;
déterminer (S30), par un gestionnaire de modèle (40), un modèle d'apprentissage automatique (M) à l'aide de la spécification de modèle (Ms), et fournir le modèle d'apprentissage automatique déterminé (M) à l'unité de commande (30) ; et
fournir (S40), par l'unité de commande (30), une réponse (R) à la demande d'informations (Ir) en utilisant le modèle d'apprentissage automatique déterminé (M) ;
déterminer, par un gestionnaire de session (31), des informations sur les actions de l'utilisateur (Ia) relatives aux actions suivies et aux informations contextuelles d'un utilisateur individuel (U) ;
déterminer, par le gestionnaire de session (31), des informations individuelles sur l'utilisateur (Iu) à l'aide des informations reçues relatives aux actions de l'utilisateur (Ia), la détermination des informations individuelles sur l'utilisateur (Iu) comprenant le suivi des actions et des informations contextuelles de l'utilisateur (U) ;
demander, par un gestionnaire d'état (32), des informations sur le paysage de service (I1) à partir d'un paysage de service (70) sur la base des informations individuelles sur l'utilisateur (Iu), le paysage de service (70) se rapportant à une structure de l'installation industrielle dans une section pertinente pour l'utilisateur (U) ;
déterminer, par le gestionnaire d'état (32), les informations globales (Ig) à l'aide des informations reçues sur le paysage de service (I1), les informations globales (Ig) comprenant des informations sur les processus, les flux de travail, les tâches et les actions en cours de l'installation industrielle ;
déterminer, par le gestionnaire de session (31), la réponse (R) pour l'utilisateur (U) à l'aide des informations globales (Ig) ;
collecter les actions de l'utilisateur sur une période de temps ;
analyser les actions de l'utilisateur et reconnaître ainsi des modèles d'actions de l'utilisateur ;
associer l'intention d'informations (I) aux modèles reconnus ; et
prédire l'intention d'informations (I) d'une demande d'informations à l'aide des modèles reconnus.

2. Procédé selon la revendication 1, comprenant les étapes suivantes :
identifier (S50), par l'unité de commande (30), une intention d'informations (I) à l'aide de la demande d'informations reçue (Ir) ; et
déterminer la spécification de modèle (Ms) à l'aide de l'intention d'informations (I).

3. Procédé selon l'une quelconque des revendications précédentes,
dans lequel la détermination d'un modèle d'apprentissage automatique (M) comprend :
de vérifier, à l'aide de la spécification de modèle (Ms), si un modèle d'apprentissage automatique approprié est stocké dans une base de données de modèles.

4. Procédé selon l'une quelconque des revendications précédentes,
dans lequel, s'il est déterminé qu'un modèle d'apprentissage automatique approprié est stocké dans la base de données de modèles, le procédé comprend l'étape suivante :
déterminer la réponse (R) à la demande d'informations (Ir) en utilisant le modèle d'apprentissage automatique stocké.

5. Procédé selon l'une quelconque des revendications précédentes,
dans lequel la détermination de la réponse à la demande d'informations (Ir) comprend les étapes suivantes :
fournir une entrée de modèle par l'unité de commande (40), l'entrée de modèle étant déterminée à l'aide de l'intention d'informations (I) ;
déterminer la réponse (R) en introduisant l'entrée de modèle dans le modèle d'apprentissage automatique (M).

6. Procédé selon l'une quelconque des revendications précédentes,
dans lequel, s'il est déterminé qu'aucun modèle d'apprentissage automatique approprié n'est stocké dans la base de données de modèles, le procédé comprend l'étape suivante :
fournir une réponse différée à un utilisateur (U).

7. Procédé selon la revendication 6, comprenant les étapes suivantes :
déterminer, par un pipeline autoML (60), un modèle d'apprentissage automatique candidat à l'aide de l'intention d'informations (I) ;
tester la qualité du modèle du modèle d'apprentissage automatique candidat ;
déterminer le modèle d'apprentissage automatique (M) à l'aide du modèle d'apprentissage automatique candidat, si la qualité du modèle est acceptable ; et
informer l'utilisateur (U) de l'échec de la génération du modèle, si la qualité du modèle n'est pas acceptable.

8. Procédé selon l'une quelconque des revendications précédentes,
dans lequel l'identification d'une intention d'informations comprend :
de traduire la demande d'informations dans un format compréhensible par une machine.

9. Procédé selon l'une quelconque des revendications précédentes,
dans lequel la fourniture d'une réponse (R) comprend :
de traduire la réponse déterminée dans un format compréhensible par l'utilisateur.

10. Procédé selon la revendication 1,
dans lequel l'étape d'analyse des actions de l'utilisateur est répétée à une fréquence prédéterminée.

11. Procédé selon l'une quelconque des revendications précédentes, comprenant les étapes suivantes :
recevoir des informations sémantiques pour une intention d'informations souhaitée ;
déterminer l'intention d'informations à l'aide des informations sémantiques reçues.

12. Assistant virtuel, configuré pour exécuter le procédé de l'une quelconque des revendications 1 à 11.
